Europäisches Patentamt

European Patent Office

Office européen des brevets

(19)

(11) Veröffentlichungsnummer: **0 014 358**
**B1**

(12) **EUROPÄISCHE PATENTSCHRIFT**

(45) Veröffentlichungstag der Patentschrift:
23.06.82

(21) Anmeldenummer: 80100246.0

(22) Anmeldetag: 18.01.80

(51) Int. Cl.³: **A 63 B 45/02,** B 29 C 25/00,
B 29 D 27/00

(54) Verfahren und Vorrichtung zur Herstellung eines Balles aus Schaumstoff mit einer Oberflächenprägung.

(30) Priorität: 02.02.79 DE 2904026

(43) Veröffentlichungstag der Anmeldung:
20.08.80 Patentblatt 80/17

(45) Bekanntmachung des Hinweises auf die Patenterteilung:
23.06.82 Patentblatt 82/25

(84) Benannte Vertragsstaaten:
AT BE CH FR GB IT NL SE

(56) Entgegenhaltungen:
FR-A-2 143 397
US-A-2 002 698
US-A-3 946 195

(73) Patentinhaber: **METZELER SCHAUM GMBH,
Donaustrasse 51, D-8940 Memmingen (DE)**

(72) Erfinder: **Bokelmann, Horst,
Richard-Kirchner-Strasse 24, D-3590 Bad Wildungen
(DE)**

(74) Vertreter: **Michelis, Theodor, Dipl.-Ing.,
Westendstrasse 131, D-8000 München 2 (DE)**

## Verfahren und Vorrichtung zur Herstellung eines Balles aus Schaumstoff mit einer Oberflächenprägung

Die Erfindung betrifft ein Verfahren zur Herstellung eines Balles aus Schaumstoff mit einer einem Fußball entsprechenden Oberflächenprägung und einer Vorrichtung zur Durchführung des Verfahrens.

Bei der Herstellung von Spielbällen aus Schaumstoff, die herkömmlichen Sportbällen aus Leder oder anderen Materialien nachgestellt sind, ist es üblich, diese Schaumstoffbälle mit einer Oberflächenprägung entsprechend dem Vorbild zu versehen, wie das beispielsweise in dem DE-U-77 30 611 oder der älteren europäischen Anmeldung 79 103 829.2 (EP-A-10 645) für einen Tennisball aus Schaumstoff beschrieben ist. Dabei wird eine geschlossene Konturlinie durch Abrollen auf einem entsprechenden Heizdraht eingebrannt. Gegenüber einem derartigen Verfahren ergeben sich jedoch Schwierigkeiten bei Bällen mit einer komplizierten Oberflächenprägung, wie das beispielsweise bei Fußbällen der Fall ist, deren Oberfläche in mehrere, angenähert gleichmäßige Abschnitte unterteilt ist.

Der Erfindung liegt daher die Aufgabe zugrunde, ein Verfahren und eine Vorrichtung zu schaffen, mit denen derartige Oberflächenprägungen einfach und doch sehr genau hergestellt werden können.

Zur Lösung dieser Aufgabe ist erfindungsgemäß vorgesehen, daß in die in mehrere gleichseitige Vielecke zu unterteilende Oberfläche abschnittweise jeweils die Kontur mindestens eines Vieleckes zusammen mit den angrenzenden halben Kantenlängen von benachbarten Vielecken eingebrannt wird. Dabei kann bei einer Unterteilung der Oberfläche in 32 Felder mit 12 Fünfecken und 20 Sechsecken, wobei jedes Fünfeck von fünf aneinandergrenzenden Sechsecken umschlossen ist, jeweils ein Fünfeck mit den angrenzenden halben Kantenlängen der benachbarten Sechsecke ausgebrannt werden. Zur Vereinfachung des Verfahrens können dabei gleichzeitig die auf einer Umfangslinie liegenden Fünfeckabschnitte und anschließend nach Drehung des Balles um 120° die benachbarten Fünfeckabschnitte eingebrannt werden.

Eine Vorrichtung zur Durchführung des Verfahrens besteht erfindungsgemäß darin, daß in einer ringförmigen Werkzeughalterung vier im Winkel zueinander und zentral zustellbare Brennwerkzeuge sowie eine zentrierende Ballhalterung angeordnet sind. Dabei weist jedes Werkzeug einen elektrisch beheizten Schneidkopf in Form eines regelmäßigen Fünfeckes mit von den Ecken radial ausgehenden Stegen mit halber Fünfeck-Kantenlänge auf. Die Ballhalterung besteht zweckmäßigerweise aus einem radial verstellbaren Stempel mit einer kugelkalottenförmigen Stirnfläche und einem diametral gegenüberstehenden, radial verstellbaren Stift. Zur Drehung des Balles ist der Stempel zweckmäßigerweise um seine Längsachse drehbar ausgebildet.

Zur Zu- und Abführung der Bälle kann die Werkzeughalterung eine seitliche, schräg geneigte Ballzuführung mit einer Ablaufsperre auf der einen Seite und eine schräg geneigte Ballabführung auf der anderen Seite aufweisen. Ferner ist es zweckmäßig, wenn konzentrisch zum Stempel ein absenkbar gehalterter Ring zum Auffangen des jeweils aus der Ballzuführung ablaufenden Balles angeordnet ist.

Mit einem derartigen Verfahren und der entsprechenden Vorrichtung ist es auf einfache Weise möglich, die einem Fußball entsprechende Oberflächenprägung exakt auf den Schaumstoff aufzubringen, wobei dies auch vollautomatisch erfolgen kann.

Anhand einer schematischen Zeichnung sind Aufbau und Wirkungsweise eines Ausführungsbeispiels des erfindungsgemäßen Balles und der Vorrichtung dargestellt. Dabei zeigt

Fig. 1 einen Schaumstoffball mit der entsprechenden Oberflächenprägung,

Fig. 2 eine Seitenansicht auf die Werkzeughalterung und die Werkzeuge,

Fig. 3a einen Längsschnitt durch ein Werkzeug,

Fig. 3b eine Aufsicht auf den Schneidkopf,

Fig. 4a eine Seitenansicht der gesamten Vorrichtung mit Zu- und Abführungsvorrichtung und

Fig. 4b eine Aufsicht auf die Gesamtvorrichtung von vorn.

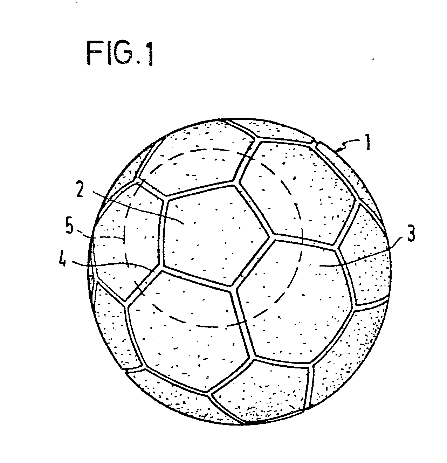

Wie aus Fig. 1 zu ersehen ist, ist die Oberfläche des Balles 1 in einer Reihe gleichseitiger Vielecke unterteilt, und zwar insgesamt in 12 Fünfecke 2 und 20 Sechsecke 3, wobei jedes Fünfeck von fünf Sechsecken umgeben ist. Bei der Prägung dieser Oberfläche auf dem runden Ball soll dabei vorgesehen werden — wie noch später im einzelnen erläutert wird — daß von einem Werkzeug ein Fünfeck mit den jeweils angrenzenden und von den Ecken radial ausgehenden Kanten der benachbarten Sechsecke in ihrer halben Kantenlänge 4 geprägt wird, so daß insgesamt in etwa ein Abschnitt erfaßt wird, der innerhalb des gestrichelten Kreises 5 liegt.

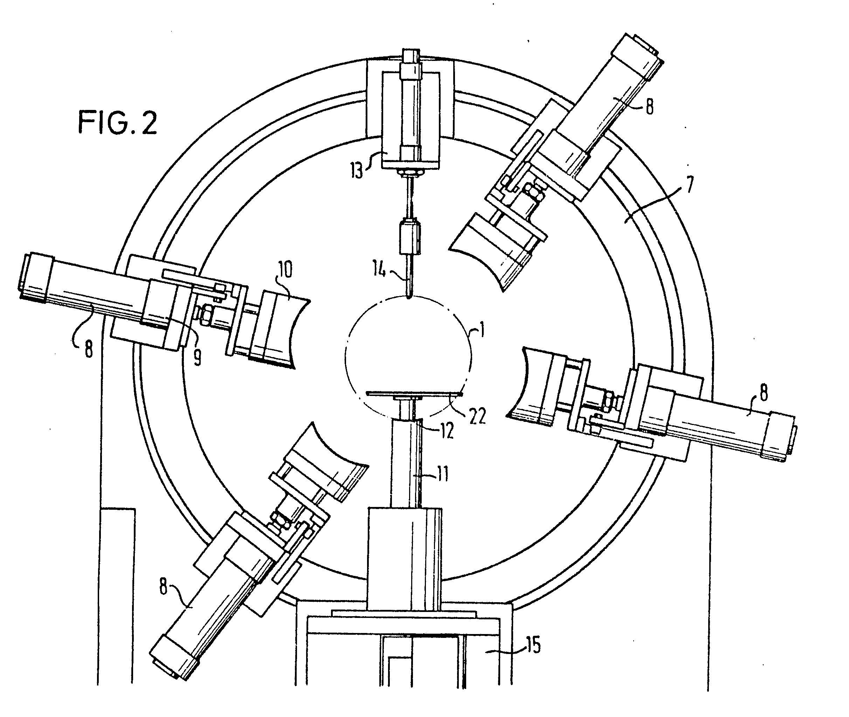

In Fig. 2 ist die Einbrennvorrichtung in Frontansicht im einzelnen dargestellt. Diese besteht im wesentlichen aus einer ringförmigen Werkzeughalterung 7, auf deren Umfang vier radial nach innen ragende und zentral zustellbare Brennwerkzeuge 8 angeordnet sind. Diese Brennwerkzeuge 8 stehen im Winkel zueinander entsprechend den auf einer Umfangslinie liegenden Fünfecken des zentral gehalterten Balles 1. Die Werkzeuge 8 weisen dabei die über Hydraulikzylinder 9 radial zustellbaren Schneidköpfe 10 auf, die später noch im einzelnen erläutert werden. Gleichzeitig ist in der Werkzeughalterung 7 in deren senkrechten Achse eine Ballhalterung angeordnet, die aus einem senkrecht verfahrbaren Stempel 11 mit einer kugelkalottenförmig gewölbten Stirnfläche 12 zur Aufnahme des Balles besteht; diametral gegenüber ist ebenfalls in der Werkzeughalterung 7 von einem Hubzylinder 13 ein radial verstellbarer Stift 14 geführt, der sich von oben auf den Ball 1 absenkt und diesen festhält. Der Stempel 11 ist am unteren Ende zusätzlich in einer Drehvorrichtung 15 geführt, die ein Verdrehen des Stempels 11 um einen vorgegebenen Winkel ermöglicht.

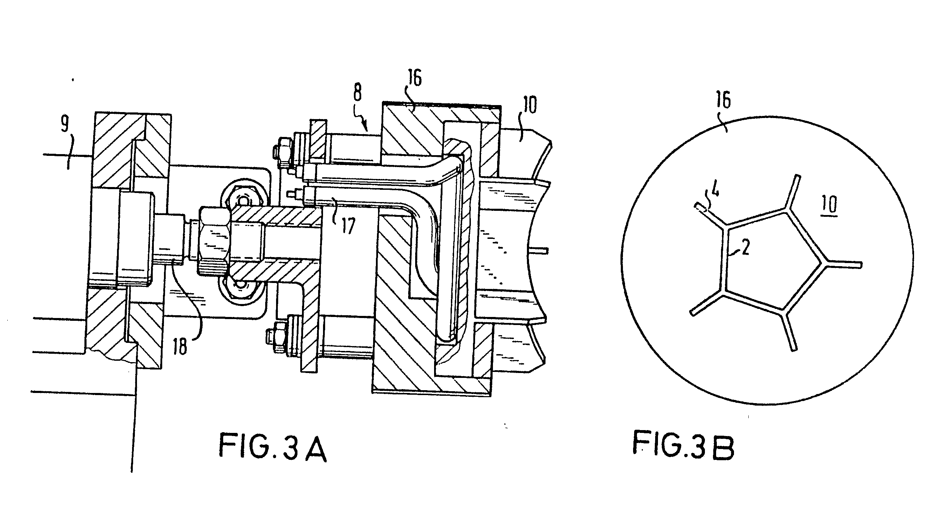

Wie im einzelnen aus Fig. 3a zu ersehen ist, besteht das Werkzeug 8 aus dem in einem Führungskopf 16 gehalterten Schneidkopf 10, der über eine stromdurchflossene Heizwendel 17 auf etwa 300° aufgeheizt werden kann. Der Führungskopf 16 kann über den im Hydraulikzylinder 9 gelagerten Kolben 18 radial verstellt werden.

Wie aus Fig. 3b zu ersehen ist, besteht der Schneidkopf 10 aus dem symmetrischen Fünfeck 2 mit von den Ecken ausgehenden Stegen 4, die der halben Fünfecklänge und damit der halben Kantenlänge der benachbarten Sechsecke entsprechen.

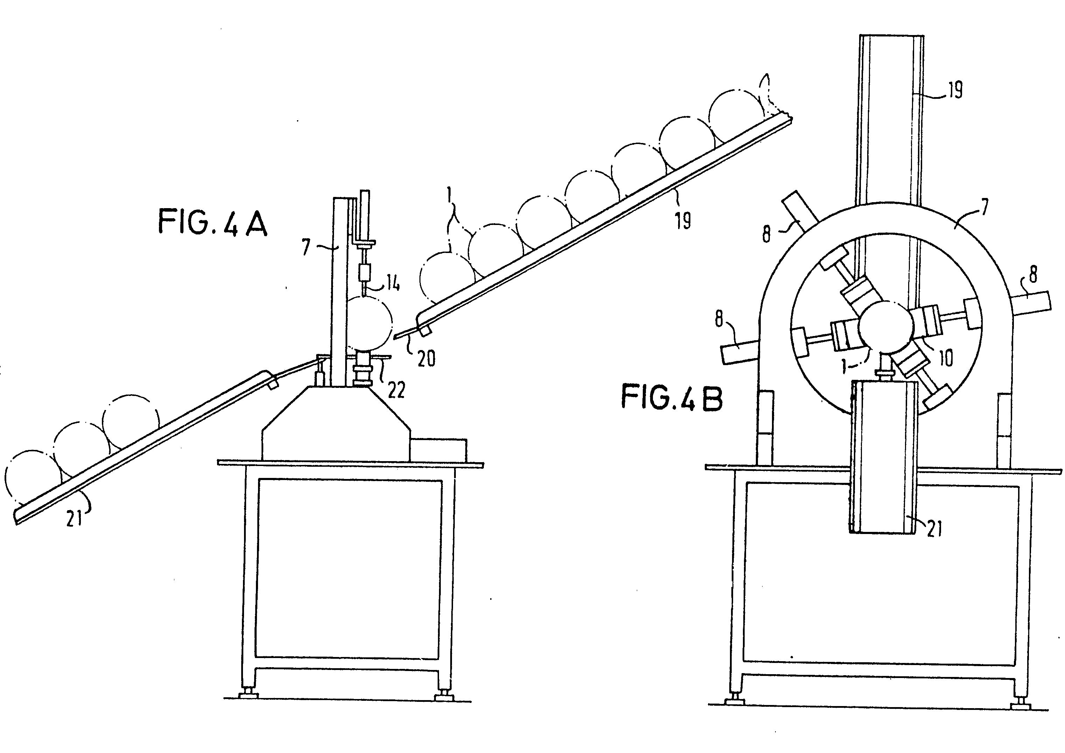

In den Fig. 4a und 4b ist die Gesamtanordnung in Seitenansicht und Aufsicht gezeigt, an der auch das gesamte Herstellungsverfahren erläutert werden soll.

Wie aus Fig. 4a ersichtlich ist, ist auf der einen Seite neben der Werkzeughalterung 7 eine schräg geneigte Ballzuführung 19 mit einer abklappbaren Ablaufsperre 20 angeordnet, während auf der anderen Seite eine ebenfalls schräg geneigte Ballabführung 21 angeordnet ist.

Die Funktion und Arbeitsweise der erfindungsgemäßen Vorrichtung ist nunmehr die folgende: Nach Freigabe der Ablaufsperre 20 rollt ein glatter Ball 1 ins Zentrum der Werkzeughalterung 7 und wird dort zunächst von einem ringförmigen Bügel 22 (siehe Fig. 2) aufgefangen, der den Ball im unteren Bereich umgreift. Nach Absenken dieses Bügels 22 — wie das auch in Fig. 4a gezeigt ist — liegt der Ball 1 auf der Stirnseite 12 des Stempels 11 auf und wird von oben durch den niederfahrenden Stift 14 arretiert. Anschließend fahren die vier Werkzeuge 8 radial zu, bis die Schneidköpfe 10 mit der Oberfläche des Balles 1 in Berührung kommen und für eine vorgegebene Zeitspanne und eine vorgegebene radiale Tiefe jeweils vier auf einer Umfangslinie liegenden Fünfeckabschnitte mit den dazwischenliegenden bzw. angrenzenden Teilsechsecken einschneiden. Die zugefahrene Stellung der Werkzeuge 8 ist dabei eindeutig aus Fig. 4b zu ersehen. Anschließend werden die Werkzeuge 8 wieder aufgefahren und der Ball 1 um 120° gedreht, worauf nach Zufahren der Werkzeuge 8 der nächste Oberflächenabschnitt mit der entsprechenden Prägung versehen wird. Nach einem weiteren Drehen um 120° und Zufahren der Werkzeuge ist die gesamte Oberfläche mit insgesamt 32 Feldern entsprechend dem Ball nach Fig. 1 versehen und kann nach Hochfahren des Stiftes 14 und beispielsweise einem nicht näher dargestellten Gebläse auf die Ballabführung 21 ausgetrieben werden.

Da der Ball 1 sehr genau im Zentrum der Werkzeughalterung fixiert und durch einen entsprechenden Antrieb des Stempels 11 genau um den vorgegebenen Winkel gedreht werden kann, ist auch eine exakte Prägung der Oberfläche mit genau fluchtenden Kantenlinien der jeweils durch mehrere Schnitte gebildeten Sechsecke möglich und gewährleistet.

**Patentansprüche**

1. Verfahren zur Herstellung eines Balles (1) aus Schaumstoff mit einer einem Fußball entsprechenden Oberflächenprägung, dadurch gekennzeichnet, daß in die in mehrere gleichseitige Vielecke (2, 3) zu unterteilende Oberfläche abschnittsweise jeweils die Kontur mindestens eines Vieleckes (2) zusammen mit den angrenzenden halben Kantenlängen (4) von benachbarten Vielecken (39) eingebrannt wird.

2. Verfahren nach Anspruch 1, dadurch gekennzeichnet, daß bei einer Unterteilung der Oberfläche in 32 Felder mit 12 Fünfecken (2) und 20 Sechsecken (3), wobei jedes Fünfeck (2) von fünf aneinandergrenzenden Sechsecken (3) umschlossen ist, jeweils ein Fünfeck (2) mit den angrenzenden halben Kantenlängen (4) der benachbarten Sechsecke (3) eingebrannt wird.

3. Verfahren nach Anspruch 1 und 2, dadurch gekennzeichnet. daß gleichzeitig die auf einer Umfangslinie des Balles (1) liegenden Fünfeckabschnitte (2; 4) und anschließend nach Drehung des Balles (1) um 120° die benachbarten Fünfeckabschnitte (2; 4) eingebrannt werden.

4. Vorrichtung zur Durchführung des Verfahrens nach Anspruch 1 mit einer ringförmigen Werkzeughalterung (7), in der vier im Winkel zueinander und zentral zustellbare Brennwerkzeuge (8) angeordnet sind, dadurch gekennzeichnet, daß jedes Werkzeug (8) einen elektrisch beheizten Schneidkopf (10) in Form eines regelmäßigen Fünfecks (2) mit von den Ecken radial ausgehenden Stegen (4) mit halber Sechseckkantenlänge aufweist und in der Werkzeughalterung (7) auch eine zentrierende Ballhalterung (11; 14) angeordnet ist.

5. Vorrichtung nach Anspruch 4, dadurch gekennzeichnet, daß die Ballhalterung aus einem radial verstellbaren Stempel (11) mit einer kugelkalottenförmigen Stirnfläche (12) und einem diametral gegenüberstehenden radial verstellbaren Stift (14) besteht.

6. Vorrichtung nach Anspruch 5, dadurch gekennzeichnet, daß der Stempel (11) um seine Längsachse drehbar ausgebildet wird.

7. Vorrichtung nach Anspruch 4 bis 6, dadurch gekennzeichnet, daß die Werkzeughalterung (7) eine seitliche, schräg geneigte Ballzuführung (19) mit einer Ablaufsperre (20) auf der einen Seite und eine schräg geneigte Ballabführung (21) auf der anderen Seite aufweist.

8. Vorrichtung nach Anspruch 5 und 7, dadurch gekennzeichnet, daß konzentrisch zum Stempel (11) ein absenkbar gehalterter Ring (22) zum Abfangen des jeweils aus der Ballzuführung (19) ablaufenden Balles (1) angeordnet ist.

## Claims

1. A process for the production of a foam ball (1) having a survace stamping corresponding to a football, characterised in that the contour of at least one polygon (2) together with the adjacent half edge lengths (4) of neighbouring polygons (3) is branded in each case in sections into the surface to be subdivided into several equilateral polygons (2, 3).

2. A process according to claim 1, characterised in that during subdivision of the surface into 32 fields having 12 pentagons (2) and 20 hexagons (3), each pentagon (2) being surrounded by five adjacent hexagons (3), one pentagon (2) is branded, in each case, with the adjacent half edge lengths (4) of the neighbouring hexagons (3).

3. A process according to claims 1 and 2, characterised in that the pentagon sections (2; 4) lying on a peripheral line of the ball (1) are simultaneously branded and, after rotating the ball (1) by 120°, the neighbouring pentagon sections (2; 4) are the simultaneously branded.

4. An apparatus for carrying out the process according to claim 1, comprising an annular tool holding device (7) in which are positioned four branding tools (8) which may be advanced centrally and at an angle to each other, characterised in that each tool (8) has an electrically heated cutter head (10) in the form of a regular pentagon (2) with ridges (4), emanating radially from the corners, of half the edge length of a hexagon, and a centering ball holding device (11; 14) is also positioned in the tool holding device (7).

5. An apparatus according to claim 4, characterised in that the ball holding device comprises a radially adjustable piston (11) having a spherical calotte-shaped front face (12), and a diametrically opposite, radially adjustable pin (14).

6. An apparatus according to claim 5, characterised in that the piston (11) is designed so that it may rotate about its longitudinal axis.

7. An apparatus according to claims 4 to 6, characterised in that the tool holding device (7) has a lateral, obliquely inclined ball delivery device (19) having a run-off locking device (20) on one side and has an obliquely inclined ball removal device (21) on the other side.

8. An apparatus according to claims 5 and 7, characterised in that a ring (22) for catching the ball (1) running off in each case from the ball delivery device (19) is positioned concentrically to the piston (11) and is supported so that it may be lowered.

## Revendications

1. Procédé de fabrication d'un ballon (1) en mousse ayant en surface une empreinte correspondant à un ballon de foot-ball, caractérisé en ce qu'il consiste à ménager par brûlage, en opérant section par section, dans la surface à subdiviser en plusieurs polygones (2, 3) le contour d'au moins un polygone (2) en même temps que les demi-côtés (4) de délimitation des polygones (3) adjacents.

2. Procédé suivant la revendication 1, caractérisé en ce qu'il consiste, pour une subdivision de la surface en trente deux domaines dont douze pentagones (2) et vingt hexagones (3) adjacents, à ménager par brûlage un pentagone (2) en même temps que les demi-côtés (4) de délimitation des hexagones (3) adjacents.

3. Procédé suivant la revendication 2, caractérisé en ce qu'il consiste à ménager simultanément par brûlage les sections pentagonales (2; 4) se trouvant sur une circonférence du ballon (1) et ensuite, après rotation du ballon (1) de 120°, les sections pentagonales (2; 4) adjacentes.

4. Installation pour exécuter le procédé suivant la revendication 1, comprenant un porte-outil (7) annulaire sur lequel sont montés quatre brûleurs (8) faisant un angle les uns par rapport aux autres et pouvant être amenés au centre, caractérisée en ce que chaque brûleur (8) présente une tête (10) coupante chauffée électriquement, en forme de pentagone (2) régulier, ayant des barrettes (4) issues radialement des sommets et de longueur égale au demi-côté des hexagones, un porte-ballon (11; 14) de centrage étant monté aussi sur le porte-outil (7).

5. Installation suivant la revendication 4, caractérisée en ce que le porte-ballon est constitué d'une étampe (11), pouvant être déplacée suivant la direction radiale et ayant une surface (12) frontale en forme de calotte sphérique, et d'une broche (14) diamétralement opposée pouvant être deéplacée suivant la direction radiale.

6. Installation suivant la revendication 5, caractérisée en ce que l'étampe (11) est montée tournante autour de son axe longitudinal.

7. Installation suivant l'une des revendications 4 à 6, caractérisée en ce que le porte-outil (7) présente, d'un côté, une rampe (19) latérale d'arivée des ballons munie d'un organe (20) d'arrêt et, de l'autre côté, une rampe (21) do sortie des ballons.

8. Installation suivant l'une des revendications 5 ou 7, caractérisée en ce que concentriquement à l'étampe (11) est monté un anneau (22), qui est maintenu en pouvant être abaissé et qui est destiné à la réception du ballon tombant de la rampe (19) d'arrivée.

FIG.1

FIG.2

FIG. 3 A

FIG. 3 B

FIG. 4 A

FIG. 4 B

0 014 358